# EUROPEAN PATENT APPLICATION

(11) **EP 0 784 394 A1**
(43) Date of publication of application: **16.07.1997**
(21) Application number: 96120787.5
(22) Date of filing: 23.12.1996
(51) Int. Cl.: H04L 12/58

(54) **Personalized greeting card system**

(30) Priority: 29.12.1995 US 580478
(71) Applicant: AT&T Corp., New York, NY 10013-2412 (US)
(72) Inventor: Chaturvedi, Anil Dass, Scotch Plains, New Jersey 07076 (US); Greenspan, Steven Lloyd, Scotch Plains, New Jersey 07076 (US)
(74) Representative: KUHNEN, WACKER & PARTNER

(57) **Abstract**

A choice of electronic and tangible products, such as greetings, are automatically offered to a customer. The selected products are then created. The electronic products may be multimedia products. The selected products may be personalized in accordance with personalization instructions received from the customer. The customer may be offered a choice of delivery procedures.

## Description

### BACKGROUND OF THE INVENTION

The present invention relates to creation of personalized greetings, and, more particularly, is directed to a public booth for creating personalized electronic and tangible social greeting messages.

A popular method for establishing and maintaining social bonds is the sending of greeting cards or other tangible items. Recently, greeting card vendors have offered customers the capability to create personalized greeting cards via equipment located in, for example, card stores. Typically, the customer interacts with a system using a CRT and keyboard or touch screen, pays for the card, and then the personalized card is created in the card store and given to the customer. Remote creation and optionally delayed mailing of the card have also been proposed.

A booth for creating small gifts personalized with a chip which audibly plays back a message recorded by the gift giver, has been suggested. The customer enters the booth, records a message via a microphone in the booth, listens to its playback, alters or approves the message and provides payment. The booth then transfers the message to a playback module and delivers the module to the customer. The customer or a mechanism within the booth places the module in a greeting card, picture frame, ornament, stuffed animal, doll, dog tag or other similar item, which the customer carries away from the booth.

The popularity of electronic mail as a way to maintain social bonds has increased tremendously, as more people become accessible through computer networks. Electronic greeting cards in a multimedia format, including text, audio and video, have been proposed, in which a sender creates an electronic greeting card and sends it to a recipient using a computer network.

However, when a customer wishes to send a greeting in both electronic and tangible form to a recipient, the customer must separately interact with different systems, and provide payment separately, as described above. This is burdensome for the customer, both procedurally and substantively, as it is difficult to co-ordinate the artistic content and delivery scheduling of the electronic and tangible greetings.

### SUMMARY OF THE INVENTION

In accordance with the present invention, a method of and an apparatus for automatically offer a choice of electronic and tangible products to a customer, receive at least one product selection from the cusotmer, and create the at least one product selected by the customer.

In one aspect of the present invention, at least one of the electronic products offered to the customer is a multimedia product.

In another aspect of the present invention, the electronic and tangible products are greetings.

Creation of the products may occur in the vicinity of the customer, and may be in accordance with personalization instructions received from the customer. The customer may be automatically offered a choice of delivery procedures.

### BRIEF DESCRIPTION OF THE DRAWINGS

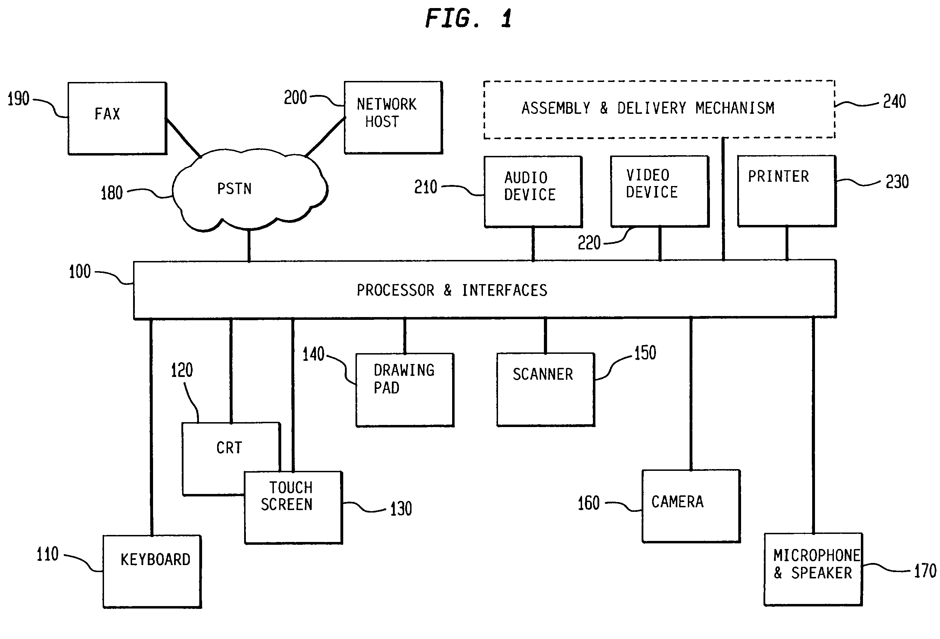

Fig. 1 is a diagram of elements of a greeting booth and associated support facilities.

### DETAILED DESCRIPTION OF THE PREFERRED EMBODIMENTS

Fig. 1 shows elements of a greeting booth and associated support facilities. The greeting booth is located in, for example, a department or specialty store, pharmacy, mall concourse, airport or hotel.

Keyboard 110, CRT 120, touch screen 130, electronic drawing pad 140, scanner 150, still and motion video camera 160, and microphone/speaker 170 are located in the greeting booth for use by a customer, and operate in conjunction with processor 100. The processor 100 includes various interfaces (not shown) apparent to one of ordinary skill in the art for communicating with the equipment accessible to the customer.

Processor 100 is adapted to access public switched telephone network (PSTN) 180, such as by a dial or dedicated connection, in order to communicate with third-party devices such as facsimile machine (FAX) 190 and network host 200. Processor 100 is further adapted to access audio device 210, video device 220, printer 230 and assembly/delivery mechanism 240. The elements 210-240 may be located in the physical vicinity of processor 100, or at a location remote from processor 100.

In operation, a customer receives instructions for entering information through CRT 120. Typically, the customer selects desired products from a menu, and for each product, provides information regarding the type of personalization, if any, to be applied to the product, and possibly selects a delivery procedure for the product. Processor 100 then repeats the personalization and delivery instructions with the customer, and the customer alters the instructions or accepts them. After acceptance, the customer provides payment and the desired products are created and delivered.

An important feature of the present disclosure is that the customer can select either or both of an electronic product and a tangible product. If both are selected, artistically co-ordinated products may be chosen, which gives the customer an opportunity to make a more memorable impression on the recipient.

An electronic product may be a multimedia product. As used herein and in the claims, "multimedia" refers to visual, audio and/or other media that can be stored digitally and subsequently presented.

For products such as greeting cards, keyboard 110 and/or touch screen 130 are used to select the specific type of greeting card and enter personalization information such as the name and birthday of the recipient.

Drawing pad 140 is used to capture handwritten messages or handmade drawings for predetermined locations of the greeting card.

Scanner 150 functions to capture information provided thereto for predetermined locations of the greeting card.

Camera 160 functions to capture a still or motion picture for a predetermined location of the greeting card.

Microphone 170 functions to capture audio information for a predetermined location of the greeting card, and speaker 170 functions to playback the audio information for acceptance by the customer.

The greeting card may be either or both of an electronic greeting or a tangible greeting. An electronic greeting is, for example, a computer file for delivery to host 200 and visual and/or audio presentation on a recipient's CRT or a computer file for printing on a recipient's facsimile machine 190. A tangible greeting is, for example, a computer file for printing by printer 230 on blank or pre-printed paper. A tangible greeting card may include an audio device and/or a video device.

The audio device stores audio information provided or selected by the customer, and plays back the stored audio information to the recipient of the card. The audio information typically is a spoken message and/or one of a predetermined set of prerecorded musical selections.

The video device stores video information provided or selected by the customer. In some cases, the video device may play back the stored video information to the recipient of the card. The video information is typically a sequence of pictures captured by camera 160 and/or one of a predetermined set of prerecorded video selections such as a nature scene or an actor performing a stunt. In some cases, the video device may also store and play back accompanying audio information.

An electronic greeting card may be a computer file which results in a screen display accompanied by audio, or followed by another display which may be a still picture or a motion picture sequence. The screen display may be artwork created by the card vendor, or may be artwork with personalization information from the customer (e.g., text, drawing, photograph) inserted at predetermined locations. In some cases, the predetermined location may be the entire screen for a period of time.

For other tangible products, such as a picture frame, ornament, stuffed animal, doll, dog tag or other similar item, an electronic representation thereof may be selected as a greeting, with an indication that a physical version accompanies the electronic greeting, although the physical version is being delivered separately. The tangible product may include an audio device and/or a video device, as described above.

Processor 100 creates electronic greetings, and delivers the greeting in accordance with the delivery instructions. Processor 100 delivers an electronic greeting by establishing a connection through PSTN 180 with the indicated destination device, such as FAX 190 (the customer has provided the telephone number for FAX 190), or network host 200 (the customer has provided the electronic mail address for the recipient, which processor 100 in turn provides to host 200).

In some cases, the customer selects immediate delivery, and the processor 100 provides either a delivery receipt to the customer in real time or an acknowledgement that the delivery process has commenced.

In other cases, the customer selects delayed delivery, such as on a particular date at a particular time, and the processor provides a receipt which simply acknowledges that the delivery instructions have been received. For delayed delivery, the processor 100 preferably transfers the electronic greeting to host 200 for storage and subsequent delivery. In some embodiments, processor 100 retains the electronic greeting until the scheduled delivery time, and then delivers it.

Processor 100 controls the creation of tangible greetings depending on whether creation occurs locally, that is, at the booth in the vicinity of the customer, or remotely. When the customer selects delayed delivery, remote creation is preferred as a remote site can more readily be staffed and configured for mailing or shipping of the tangible greetings.

In the case of a locally created paper greeting card, processor 100 instructs mechanism 240 to load the correct paper form, such as a preprinted form, in printer 230. After printer 230 acknowledges to processor 100 that it has paper loaded therein, processor 100 instructs the printer to print the greeting composed by the customer. In some cases, processor 100 instructs mechanism 240 to retrieve the printed card and present it to the customer.

If the customer selects audio information for the card, then processor 100 provides the selected audio information to audio device 210, which loads the audio information into a physical memory, such as a chip located in a playback device. Processor 100 then instructs mechanism 240 to insert the audio device in the greeting card. In some embodiments, the audio device and card may be separately presented to the customer, and processor 100 instructs the customer as to how to insert the audio device in the card. A similar procedure is followed for video device 220. The actual video device may be, for example, a CD-ROM.

A similar procedure may be used for other tangible products. For example, printer 230 may print a label which mechanism 240 affixes to the product.

For remotely created products, the processor 100 preferably delivers the customer instructions as a file to a remote host computer (not shown). At the remote location, the remote host controls a printer, an audio device maker and a video device maker, as generally discussed above, and delivers the finished product to the recipient using an appropriate delivery service.

An advantage of remote creation of products is that a wider range of products may be offered to the customer, such as perishable products. For example, an electronic greeting card may show a particular flower arrangement to the recipient, and the physical fresh flower arrangement with a personalized card may be delivered to the recipient on the same day.

If the customer so desires, information regarding the customer and designated recipients is maintained by the greeting booth. In this case, the customer may, at one time, select multiple independent greetings for the designated recipient with delivery at different dates, e.g., birthday, anniversary, Valentine's Day and so on. Preferably, the greeting booth delivers such information to a remote host for storage therein, and the remote host supervises product creation and delivery in accordance with the customer's instructions.

Although an illustrative embodiment of the present invention, and various modifications thereof, have been described in detail herein with reference to the accompanying drawings, it is to be understood that the invention is not limited to this precise embodiment and the described modifications, and that various changes and further modifications may be effected therein by one skilled in the art without departing from the scope or spirit of the invention as defined in the appended claims.

## Claims

1. A method of creating electronic and tangible products, comprising the steps of:
automatically offering a choice of the electronic and tangible products to a customer,
receiving at least one product selection from the cusotmer, and
creating the at least one product selected by the customer.

2. The method of claim 1, wherein at least one of the electronic products offered to the customer is a multimedia product.

3. The method of claim 1, wherein the electronic and tangible products are greetings.

4. The method of claim 1, wherein the step of creating the products occurs in the vicinity of the customer.

5. The method of claim 1, further comprising the step of receiving personalization instructions from the customer for the selected products, and wherein the step of creating includes personalizing the selected products in accordance with the personalization instructions received from the customer.

6. The method of claim 1, further comprising the steps of automatically offering a choice of delivery procedures to the customer, and receiving a delivery procedure selection from the customer.

7. The method of claim 6, wherein the delivery procedure includes sending a chosen tangible product to a recipient.

8. Apparatus for creating electronic and tangible products, comprising:
means for automatically offering a choice of the electronic and tangible products to a customer,
means for receiving at least one product selection from the customer, and
means for creating the at least one product selected by the customer.

9. The apparatus of claim 8, wherein at least one of the electronic products offered to the customer is a multimedia product.

10. The apparatus of claim 8, wherein the electronic and tangible products are greetings.

11. The apparatus of claim 8, wherein the means for creating the products is in the vicinity of the customer.

12. The apparatus of claim 8, further comprising means for receiving personalization instructions from the customer for the selected products, and wherein the means for creating is operative to personalize the selected products in accordance with the personalization instructions received from the customer.

13. The apparatus of claim 8, further comprising means for automatically offering a choice of delivery procedures to the customer, and means for receiving a delivery procedure selection from the customer.

14. The apparatus of claim 13, wherein the delivery procedure includes sending a chosen tangible product to a recipient.

15. Apparatus for creating electronic and tangible greetings, comprising:
a display for automatically offering a choice of the electronic and tangible greetings to a customer,
a data entry device for receiving at least one greeting selection from the customer, and
means for creating the at least one greeting selected by the customer.
